# EUROPÄISCHE PATENTSCHRIFT

(11) **EP 3 685 791 B1**
(45) Veröffentlichungstag und Bekanntmachung des Hinweises auf die Patenterteilung: **23.02.2022**
(21) Anmeldenummer: 20158351.5
(22) Anmeldetag: 21.06.2010
(51) Int. Cl.: A61C 5/62, A61C 5/64

(54) **EINWEG-KARTUSCHEN ZUM LAGERN UND AUSBRINGEN DENTALER ZWEIKOMPONENTEN-ABFORMMASSEN**
DISPOSABLE CARTRIDGES FOR STORING AND APPLYING DENTAL DUAL COMPONENT CASTING COMPOUNDS
CARTOUCHES À UNE VOIE POUR LE STOCKAGE ET L'EXTRACTION DE MASSES DE FORMAGE DENTAIRES À DEUX COMPOSANTS

(30) Priorität: 30.06.2009 DE 102009031306
(43) Veröffentlichungstag der Anmeldung: 29.07.2020
(62) Teilanmeldung aus: 10006415.3
(73) Patentinhaber: Kulzer GmbH, 63450 Hanau (DE)
(72) Erfinder: Grundler, Andreas, 35516 Münzenberg (DE); Nehren, Klaus-Dieter, 41539 Dormagen (DE); Von Schuckmann, Alfred, 47627 Kevelaer (DE)
(74) Vertreter: Bendele, Tanja

(56) Entgegenhaltungen:
- WO-A1-2005/095225
- WO-A1-2008/076941
- US-A- 3 144 966
- US-A- 5 501 371
- ZA-B- 200 604 366

## Beschreibung

Die Erfindung betrifft Einweg-Kartuschen zum Lagern und Ausbringen dentaler Zweikomponenten-Abformmassen.

### Technischer Hintergrund und Aufgabenstellung

Abformmassen zur dentalen Abdrucknahme werden als Kombination zweier Komponenten angeboten, die getrennt aufbewahrt und vor Gebrauch gemischt werden. Die Mischung härtet nach einer Verarbeitungszeit im Minutenbereich, während der die Masse beim Zahnarzt in einen Abformlöffel gefüllt wird und folgend der Abdruck im Mund des Patienten genommen wird. Der gehärtete Abdruck wird entnommen und dient der Anfertigung des Modells oder wird zur Erzeugung eines virtuellen Modells gescannt.

Das Mischen der Abformmaterialien kann in der Zahnarztpraxis per Anrühren im Handbetrieb oder mit sogenannten Automix-Geräten erfolgen. Derartige Mischgeräte zum automatischen Anmischen dentaler Abformmassen sind z.B. als Modelle der Pentamix^{®}-Serie der Firma 3M ESPE , Plug&Press^{®} Dispenser der Firma Kettenbach, MixStar^{®} der Firma DMG oder Dynamix^{®} der Firma Heraeus Kulzer auf dem Markt.

Es besteht weiterhin ein Bedarf, derartige Geräte und Systeme hinsichtlich Komforts für den Anwender und Zuverlässigkeit und Reproduzierbarkeit des Abformprozesses zu verbessern. Es ist wünschenswert, wenn der Anwender Abformlöffel einfach und schnell befüllen und dabei die Verarbeitungszeit vorwählen bzw. variieren kann.

Die Erfinder haben sich insbesondere die Aufgabe gestellt, ein System zu entwickeln, das es erlaubt, Abformmaterialien in der Zahnarztpraxis mittels Gerät automatisch anzumischen und dabei - wie zuvor nur bei handgemischten und handdosierten Abformmaterialien möglich - die Verarbeitungszeit variabel durch den Anwender/Zahnarzt/Zahnarzthelferin einzustellen. Eine zusätzliche Anforderung stellt eine einfache Handhabung, vorzugsweise für die Einmalanwendung (single-use / single-dose) dar, die es ermöglicht, den Zeitaufwand für den gesamten Ablauf der Vorbereitung und Füllung des Abformlöffels zu minimieren. Zu diesem Zeitaufwand zählt alles was zum Füllen eines Abformlöffels durchgeführt werden muss, inklusive Materialbereitstellung und -Dosierung, Zusammenbau von Komponenten sowie der Restmengenentsorgung und Reinigung. Im Detail stellen sich diese Prozesse wie folgt dar:

### Stand der Technik

Seit einigen Jahren sind in den Zahnarztpraxen hand- oder motorgetriebene Geräte etabliert, die aus Schlauchbeutelsystemen oder Mehrkammerkartuschen Abformmassen dosieren, fördern und zugleich mittels statischen oder rotierenden Aufsätzen mischen. Zur kompletten Be-füllung von Abformlöffeln werden in der Regel motorbetriebene Geräte verwendet, die mit 360 bis 380 ml fassenden Doppelkartuschen oder Schlauchbeuteln bestückt werden. Diese Gebindegrößen reichen für durchschnittlich 10 Löffelfüllungen. Daher werden diese Geräte zusammen mit für einmaligen Gebrauch vorgesehenen wechselbaren rotierenden Mischaufsätzen verwendet. Diese müssen z.T. aufwendig mit dem Gerät bzw. der Kartusche verbunden werden.

Für kleinere Mengen (z.B. zum Abformen präparierter Einzelzähne oder Korrekturabformungen) werden mehrfach verwendbare 25 bis 75 ml fassende Doppelkartuschen mit auswechselbaren statischen Einwegmischern eingesetzt.

In WO 2007/126532 bzw. US 2007/0228076 sind Mehrkomponentenkartuschen und in EP 1 846 308 sind Mehrkomponentenspritzen beschrieben, die mit 0,5 bis 2,5 ml deutlich kleinere Mengen enthalten, so dass diese mit einem aufgeschraubten bzw. aufgesteckten Statikmischer für eine Einmalanwendung bei Korrekturabformmasse ausreicht.

WO2005095225 und ZA200604366 offenbaren Einweg-Kartuschen mit einem manuellen Antrieb durch manuelle Druckausübung.

In WO 2008/048603 sind vorgefüllte Portionspackungen beschrieben, deren Inhalt von Hand anzumischen ist.

In EP 1 308 137 A2 wird ein Mischgerät vorgestellt, das eine variable Dosierung von flüssigen Komponenten ermöglicht. DE 32 33 366 A1 hat einen Apparat zum Gegenstand, der die Kolben zweier Kartuschen getrennt ansteuert, so dass verschiedene Austraggeschwindigkeiten der einzelnen Komponenten möglich sind.

Die oben beschriebenen Systeme haben allerdings folgende Nachteile: Die großvolumigen Schlauchbeutel und Kartuschen benötigen auch entsprechend große und leistungsstarke Maschinen, die in der Praxis viel Arbeitsfläche benötigen, die häufig nicht vorhanden ist. Das Wechseln der Kartuschen und der Mischer ist immer mit Zeitaufwand und Verschmutzung bzw. Kontamination mit den Produktkomponenten verbunden. Nach dem Bestücken eines Gerätes mit einer Kartusche müssen zunächst die Füllstände der beiden Komponentenkammern durch Verwerfen von ausgefördertem Material auf Gleichstand gebracht werden.

Die ausgeförderte Pastenmischung besitzt immer eine Verarbeitungszeit die vom Material vorgegeben, aber durch Raum- bzw. Lagertemperatur beeinflusst werden. Dadurch kommt es Jahreszeiten- und Klimazonen bedingt zu großen Schwankungen der Verarbeitungszeiten der Mischungen. Zur Korrektur dieses Problems werden solche Materialien mit verschiedenen Verarbeitungszeiteinstellungen, wie z.B. als regular set oder fast set, angeboten, oder empfohlen, Materialien im Kühlschrank oder Thermoschrank zu temperieren.

Mittlerweile sind viele verschiedene rotierende Mischer im Markt verbreitet, die aber untereinander teilweise nicht kompatibel sind oder für die gerade verwendete Konsistenz keine optimale Mischung ergeben. Der Anwender ist daher häufig gezwungen, unterschiedliche Mischer zu bevorraten, die dann verwechselt werden können.

Kartuschen für das Austragen mittels handgetriebener Geräte fassen zwar ausreichend Volumen für eine komplette Befüllung eines Abformlöffels von durchschnittlich 40 - 50 ml, erfordern aber in diesem Fall einen sehr großen Kraft- und Zeitaufwand. Knetbare Konsistenzen lassen sich damit gar nicht fördern. Die Klima- und Verarbeitungszeitproblematik ist auch hierbei unverändert gegeben.

Bei älteren Systemen, wie zum Beispiel jenen der kondensationsvernetzenden Silikonabformmassen, kann der Anwender durch Unter- oder Überdosierung des Aktivators die Verarbeitungszeit individuell steuern, da die Komponenten dieser Materialien einzeln in Tuben, Dosen oder Flaschen angeboten werden. Diesen Vorteil können alle bislang angebotenen Kartuschen-, Schlauchbeutel- und Spritzensysteme durch ihre Zwangsdosierung nicht mehr bieten. Die Nachteile der variablen Dosiermöglichkeit liegen allerdings darin, dass diese Materialien auch falsch dosiert oder die Mischung dieser oftmals schlecht oder unzureichend durchgeführt wird und geübte Anwender erfordert.

### Die Erfindung

Die anfangs dargestellte Aufgabenstellung wurde durch eine Koaxialkartusche gemäß Anspruch 1 gelöst und ein System umfassend ein dazu passendes Fördermittel gemäß Anspruch 10 gelöst. Weitere Ausgestaltungen sind den davon abhängigen Ansprüchen zu entnehmen.

Der Rotor des Mischers ist zweckmäßigerweise Bestandteil des Innenteils, und der Stator/Hülle des Mischers Bestandteil der Außenhülle der Kartusche.

Die Mischertülle kann fest mit der Kartusche verbunden sein. Die Tülle kann auch durch Dreh- und/oder Steckbewegung mit der Kartusche verbunden werden.

Das Volumen ist zweckmäßig so gestaltet, dass je eine für eine Abformlöffel-Füllung ausreichende Menge beider benötigten Komponenten in die Koaxial-Mehrkomponenten-Kartusche gefüllt und darin gelagert wird. Dadurch ist eine Einmalverwendung vorgegeben, und es wird keine Zeit benötigt, um die Komponentenkammern anzugleichen oder Teile zu reinigen.

Vorteilhaft ist es, wenn das Mischelement fest mit der Kartusche verbunden ist, beziehungsweise darin integriert ist.

Das ist dadurch zu realisieren, dass der rotierende Teil des Mischers einen Fortsatz der inneren Kartuschenkammer darstellt.

Die Steuerbarkeit der Verarbeitungszeit wird über das Mischungsverhältnis der beiden Komponenten realisiert. Das wird dadurch ermöglicht, dass die beiden Kolben der Komponentenkammern in unterschiedlicher Geschwindigkeit unabhängig voneinander förderbar sind.

Das wird zum Beispiel durch rohrförmige Gestaltung eines Förderstempels für die äußere Kammer und zylindrische Gestaltung des darin verlaufenden inneren Förderstempels für die innere Kammer ermöglicht. Der Schub der Förderstempel ist unabhängig zu steuern. Die Erfindung betrifft auch ein derartiges Fördermittel.

Die Variation der Verarbeitungszeit kann so gestaltet werden, dass sie mittels Schalter/Regler durch den Anwender einstellbar ist. Zusätzlich oder alternativ kann die Dosierung über die Umgebungs- oder Pastentemperatur geräteseitig korrigiert werden.

Die zum Teil unmittelbar auf der Hand liegenden Vorteile der erfindungsgemäßen Kartuschen lassen sich wie folgt zusammenfassen:
Da es sich um Einmalanwendungen handelt, entfällt jeglicher Reinigungsaufwand.

Durch den integrierten Mischer muss dieser nicht separat bevorratet werden und es besteht keine Verwechselungsgefahr. Der Mischer muss nicht gesondert angebracht und fixiert werden. Es ist durch geschickte Ausgestaltung der inneren Mischerkammer möglich, eine automatische Kartuschenöffnungsfunktion vorzusehen.

Das benötigte Mischgerät kann wesentlich kleiner gestaltet sein, als es bei bisherigen motorgetriebenen Mischgeräten für Löffelmaterialien der Fall ist. Es nimmt daher wesentlich weniger Platz auf der Arbeitsfläche eines Behandlungsraumes ein.

Das Gerät kann auch wesentlich leichter gestaltet werden, so dass z. B. auch akkubetriebene mobile Varianten möglich sind. Bisherige Geräte sind dafür zu groß und zu schwer.

Die gesamte Handhabung, vom Einsetzen der Kartusche, über das Befüllen des Abformlöffels bis hin zur Entsorgung verkürzt sich auf wenige Sekunden.

Durch die unabhängig angetriebene Komponentenförderung ist eine Variierung der Verarbeitungszeit durch Mischungsverhältnisänderung möglich.

Das erlaubt dem Anwender seine Wunsch-Verarbeitungszeit vorzuwählen.

Zusätzlich kann durch Berücksichtigung der Umgebungstemperatur auf diese reagiert werden, wodurch weltweit und ganzjährig konstante Verarbeitungszeiten mit diesem System realisierbar sind.

Es ergeben sich folgende Anwendungsmöglichkeiten:
Einweg-Kartuschen zur Lagerung, Dosierung und Anmischung von vorzugsweise mittelviskosen bis knetbaren dentalen Abformmassen wie sie für das Befüllen von Abformlöffeln benötigt werden.

Eine weitere Einsatzmöglichkeit ergibt sich bei Dubliermassen für die Zahntechnik.

Durch die einfache Anwendung ist ein Einsatz z.B. im Modellbau, Kriminalistik, Archäologie, Metallographie, Hobby- und Bastelbereich denkbar.

Durch Variation des Mischeraufsatzes kann dieser auch wechselbar gestaltet werden. In dem Fall wäre das benötigte Gerät zusätzlich für niedrigere Konsistenzen einsetzbar, bei denen man nur kleine Mengen für die Korrekturabformung oder Bissregistrierung benötigt, bzw. würde sich das System Gerät/Kartusche auch für Mehrfachbefüllung eignen.

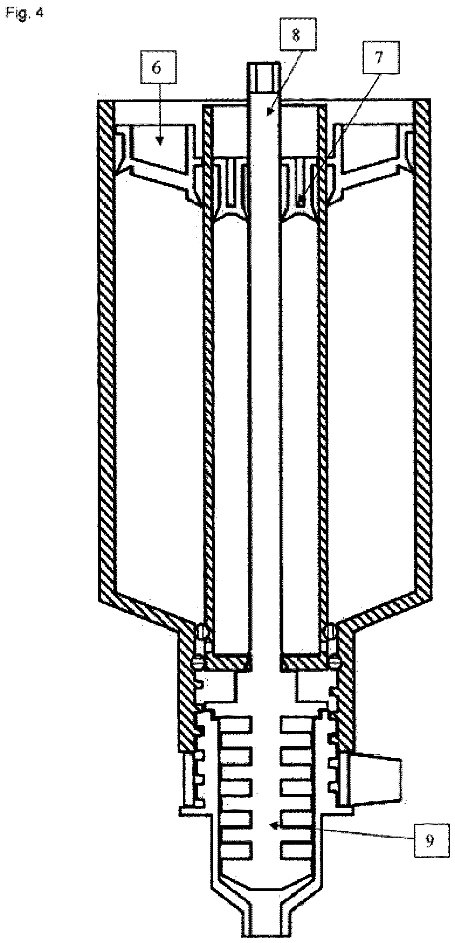

Nur die Abbildung 4 offenbart den beanspruchten Gegenstand.
- Fig. 1: zeigt eine Ausführungsform der Kartusche mit Mischeraufsatz, bei der die Innenkammer drehbar um die Längsachse der Kartusche gelagert ist.
- Fig. 2: zeigt ein Funktionsmodell der Anordnung konzentrischer Antriebstempel für Schub und Drehung,
- Fig. 3: zeigt eine seitliche Ansicht des in Fig. 2 dargestellten,
- Fig. 4: zeigt eine erfindungsgemäße Variante, bei der die Antriebswelle für den Mischer durch die innere Kartusche läuft,
- Fig. 5: zeigt eine exzentrische Anordnung der inneren Kammer relative zur Mittelachse der äußeren.

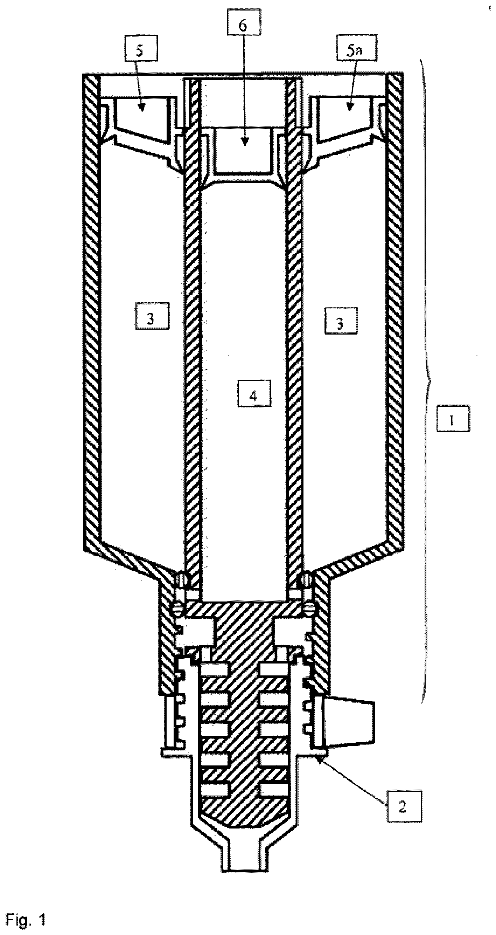

Die in Figur 1 offenbarte Kartusche **1** weist einen Mischaufsatz **2** auf. Die Innenkammer **4** (Catalyst/Cat) ist in diesem Fall koaxial in der Außenkammer **3** (Base) angeordnet. Am dem Mischaufsatz abgewandten Ende der Kartusche **1** ist im Querschnitt der ringförmige Deckel **5, 5a** der Außenkammer **3** zu erkennen. Der Deckel **6,** der in diesem Fall um ihre Längsachse drehbar gelagerten Innenkammer **4** kann mit einem Verbindungsmittel (z.B. Kronerad, Inbus^{®}) ausgestattet sein und von einem stabförmigen Stempel mit zum Verbindungsmittel passendem Ende angetrieben werden. Damit kann sowohl Schub als auch Drehung der Innenkammer bewirkt werden. Der Schub auf den ringförmigen Deckel **5, 5a** der Außenkammer **3** kann entsprechend von einem rohrförmigen Stempel bewirkt werden.

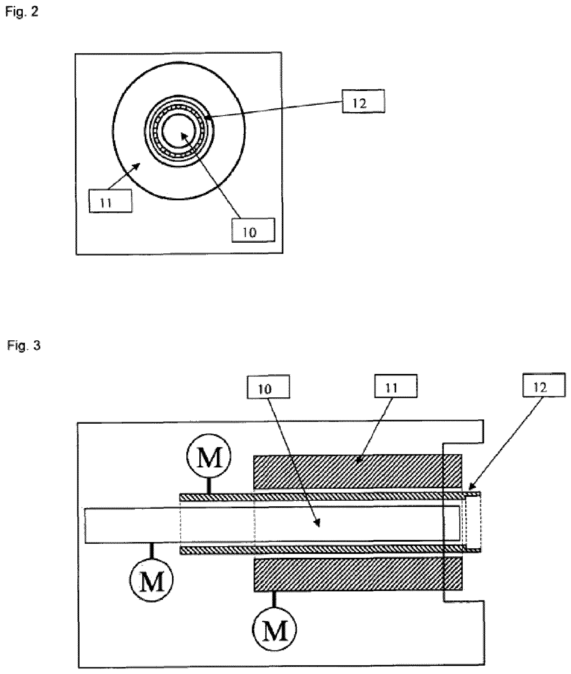

Fig. 2 und Fig. 3 zeigen ein Funktionsmodell entsprechend ineinander angeordneter Stempel **10, 11** für Schub und **12** für Drehung.

In Fig. 4 ist eine erfindungsgemäße Variante zu sehen, bei der zwei koaxiale zylinderringförmige Kammern einen Antriebswelle für den Mischer umgeben. Man sieht die beiden Ringkolben **6** und **7** und in deren gemeinsamer der Zentralachse die Antriebswelle **8** und den Mischaufsatz **9.**

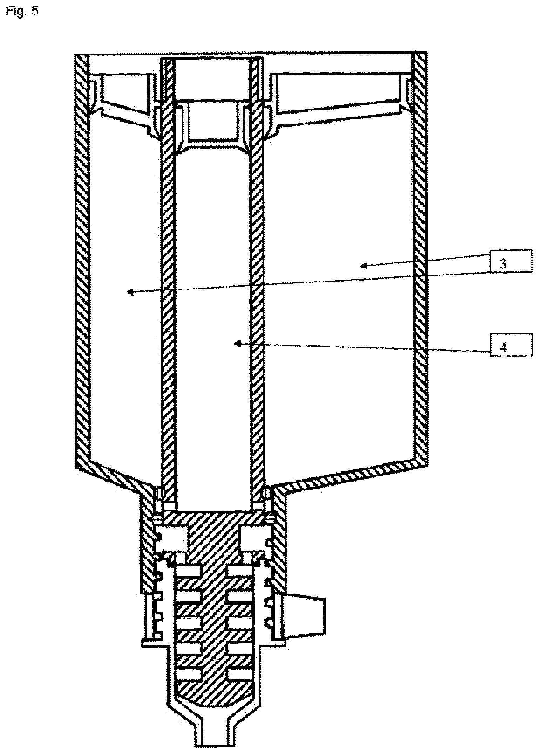

Fig. 5 zeigt eine Variante mit exzentrischer Anordnung der Innenkammer **4.** Es versteht sich, dass die Stempel, die den Schub und die Drehung bewirken, entsprechend versetzt anzusetzen sind.

## Patentansprüche

1. Einweg-Kartusche zum Lagern und Ausbringen dentaler Zweikomponenten-Abformmassen mit
a einer verschließbaren äußeren Kammer (3) mit zylindrisch ausgeformter Außenwand,
b einer darin koaxial oder exzentrisch angeordneten zylindrischen verschließbaren inneren Kammer (4),
**gekennzeichnet durch**,
c ein separat zu montierendes oder an seinem Einlassende mit der äußeren Kammer (3) fest verbundenes Mischelement (2), wobei eine Antriebswelle (8) parallel zur Mittelachse durch die innere zylindrische Kammer (4) verläuft.

2. Einweg-Kartusche nach Anspruch 1, bei der der statische Teil des Mischelements, die Mischertülle, entweder fest mit der Kartusche verbunden ist oder auf- und abschraubbar und/oder -schiebbar mit der Kartusche verbunden ist.

3. Einweg-Kartusche nach Anspruch 1 oder 2, bei der die Komponentenzugänge zum Innenraum des Mischers durch Verschiebung der beiden Komponentenkammern zu einander geöffnet werden.

4. Einweg-Kartusche nach einem der Ansprüche 1 bis 3, deren Volumen so gestaltet ist, dass je eine für eine Abformlöffel-Füllung ausreichende Menge beider benötigten Komponenten einer Abformmasse in die Kartusche passt.

5. Einweg-Kartusche nach einem der Ansprüche 1 bis 4, **dadurch gekennzeichnet, dass** ein Mischaufsatz (9) integral mit der Antriebswelle (8) ausgebildet ist.

6. Einweg-Kartusche nach einem der Ansprüche 1 bis 5, **dadurch gekennzeichnet, dass** die äußere Kammer (3) einen äußeren Ringkolben (6) und die innere Kammer (4) einen inneren Ringkolben (7) umfasst.

7. Einweg-Kartusche nach Anspruch 6, **dadurch gekennzeichnet, dass** in der gemeinsamen Zentralachse der beiden Ringkolben (6, 7) die Antriebswelle (8) verläuft.

8. Einweg-Kartusche nach Anspruch 6 oder 7, **dadurch gekennzeichnet, dass** in der gemeinsamen Zentralachse der beiden Ringkolben (6, 7) der Mischaufsatz (9) angeordnet ist.

9. Einweg-Kartusche nach einem der Ansprüche 6 bis 8, **dadurch gekennzeichnet, dass** die beiden Ringkolben (6, 7) in unterschiedlicher Geschwindigkeit unabhängig voneinander förderbar sind.

10. System bestehend aus einer Einweg-Kartusche nach einem der Ansprüche 1 bis 9 und einem Fördermittel für die Einweg-Kartusche umfassend zwei unabhängige Förderstempel, deren axiale Schubbewegung unabhängig voneinander zu steuern ist.

11. System nach Anspruch 10, **dadurch gekennzeichnet, dass** das Fördermittel einen rohrförmigen äußeren Förderstempel aufweist, durch den der Schub auf den äußeren Ringkolben (6) der äußeren Kammer (3) bewirkbar ist.

12. Verwendung der Einweg-Kartusche nach einem der Ansprüche 1 bis 9 zur Lagerung, Dosierung und Anmischung von dentalen Abformmassen für Abformlöffel.

## Claims

1. Single-use cartridge for storing and dispensing dental two-component impression materials with
a a closable outer chamber (3) having a cylindrically shaped outer wall,
b a cylindrical closable inner chamber (4) being coaxially or eccentrically arranged therein,
c a mixing element (2) to be mounted separately or being connected firmly to the outer chamber (3) at its inlet end,
a drive shaft (8) running parallelly to the middle axis through the inner cylindrical chamber (4).

2. Single-use cartridge according to claim 1, in which the static part of the mixing element, the mixing spout, is either firmly connected to the cartridge or is connected to the cartridge in a screwable on and off and/or slidable on and off manner.

3. Single-use cartridge according to claim 1 or 2, in which the component entryways to the internal space of the mixer are opened by shifting the two component chambers relatively to each other.

4. Single-use cartridge according to any one of the claims 1 to 3, the volume of which is provided such that respectively one amount sufficient for one impression tray filling of the two required components of an impression material fits into the cartridge.

5. Single-use cartridge according to any one of the claims 1 to 4, **characterised in that** a mixing attachment (9) is integrally formed with the drive shaft (8).

6. Single-use cartridge according to any one of the claims 1 to 5, **characterised in that** the outer chamber (3) comprises an outer ring piston (6) and the inner chamber (4) comprises an inner ring piston (7).

7. Single-use cartridge according to claim 6, **characterised in that** the drive shaft (8) runs in the joint central axis of the two ring pistons (6, 7).

8. Single-use cartridge according to claim 6 or 7, **characterised in that** mixing attachment (9) is arranged in the joint central axis of the two ring pistons (6, 7).

9. Single-use cartridge according to any one of the claims 6 to 8, **characterised in that** the two ring pistons (6, 7) are conveyable independently from one another in different velocities.

10. System consisting of a single-use cartridge according to any one of the claims 1 to 9 and a conveying means for the single-use cartridge comprising two independent conveying plungers, the axial drive movement of which to be controlled independently from one another.

11. System according to claim 10, **characterised in that** the conveying means has a tubular outer conveying plunger by which the thrust is effectible on the outer ring piston (6) of the outer chamber (3).

12. Use of a single-use cartridge according to any one of the claims 1 to 9 for storing, dosing and blending of dental impression materials for impression trays.

## Revendications

1. Cartouche à usage unique pour stocker et dispenser des matériaux d'empreinte dentaires à deux composants avec
a une chambre extérieure (3) fermable ayant une paroi extérieure de forme cylindrique,
b une chambre intérieure (4) fermable cylindrique étant coaxialement ou excentriquement arrangée là-dedans,
c un élément de mélange (2) à être monté séparément ou étant fermement connecté à la chambre extérieure (3) à son extrémité d'entrée,
un arbre d'entraînement (8) se déroulant parallèlement à l'axe médian au travers de la chambre intérieure cylindrique (4).

2. Cartouche à usage unique selon la revendication 1, dans laquelle la partie statique de l'élément de mélange, le bec de mélange, soit est connecté fermement à la cartouche soit est connecté à la cartouche de façon vissable et dévissable et/ou poussable et dépoussable.

3. Cartouche à usage unique selon la revendication 1 ou 2, dans laquelle les portes d'entrée de composants à l'espace interne du mélangeur sont ouvris par déplacer les deux chambres de composants l'une par rapport à l'autre.

4. Cartouche à usage unique selon l'une des revendications 1 à 3, le volume de laquelle est conçu de telle sorte que respectivement une quantité suffisante pour un remplissage de porte-empreinte des deux composants requis d'un matériau d'empreinte ajuste dans la cartouche.

5. Cartouche à usage unique selon l'une des revendications 1 à 4, **caractérisée en ce qu'**un embout de mélange (9) est formé intègrement avec l'arbre d'entraînement (8).

6. Cartouche à usage unique selon l'une des revendications 1 à 5, **caractérisée en ce que** la chambre extérieure (3) comprend un piston annulaire extérieure (6) et la chambre intérieure (4) comprend un piston annulaire intérieure (7).

7. Cartouche à usage unique selon la revendication 6, **caractérisée en ce que** l'arbre d'entraînement (8) se déroule dans l'axe central commun des deux pistons annulaires (6, 7).

8. Cartouche à usage unique selon la revendication 6 ou 7, **caractérisée en ce que** l'embout de mélange (9) est arrangé dans l'axe central commun des deux pistons annulaires (6, 7).

9. Cartouche à usage unique selon l'une des revendications 6 à 8, **caractérisée en ce que** les deux piston annulaires (6, 7) sont refoulable indépendamment l'un de l'autre à des vitesses différentes.

10. Système consiste à une cartouche à usage unique selon l'une des revendications 1 à 9 et un moyen de transport pour la cartouche à usage unique comprenant deux pistons de transport indépendants, le mouvement d'entraînement axiale duquel à être contrôler indépendamment l'un à l'autre.

11. Système selon la revendication 10, **caractérisée en ce que** le moyen de transport a un piston de transport extérieure tubulaire par lequel la poussée est effectuable sur le piston annulaire extérieure (6) de la chambre extérieure (3).

12. Utilisation d'une cartouche à usage unique selon l'une des revendications 1 à 9 pour stocker, doser et mélanger des matériaux d'empreinte dentaire pour des porte-empreintes.
